# EUROPÄISCHE PATENTSCHRIFT

(11) **EP 3 485 196 B1**
(45) Veröffentlichungstag und Bekanntmachung des Hinweises auf die Patenterteilung: **24.02.2021**
(21) Anmeldenummer: 17748663.6
(22) Anmeldetag: 18.07.2017
(51) Int. Cl.: F23D 14/40, F23D 14/72, F23D 11/40

(54) **BRENNER UND FAHRZEUGHEIZGERÄT**
BURNER AND VEHICLE HEATER
BRÛLEUR ET APPAREIL DE CHAUFFAGE DE VÉHICULE

(30) Priorität: 18.07.2016 DE 102016113222
(43) Veröffentlichungstag der Anmeldung: 22.05.2019
(73) Patentinhaber: Webasto SE, 82131 Stockdorf (DE)
(72) Erfinder: NEIDENBERGER, Peter, 82131 Stockdorf (DE); LEINSLE, Paul, 82131 Stockdorf (DE); DELL, Vitali, 82131 Stockdorf (DE)
(74) Vertreter: Schumacher & Willsau
(86) Internationale Anmeldenummer: PCT/EP2017/068127
(87) Internationale Veröffentlichungsnummer: WO 2018/015385

(56) Entgegenhaltungen:
- DE-A1- 2 802 543
- DE-A1- 4 002 570
- DE-A1- 19 824 719

## Beschreibung

Die Erfindung betrifft einen Brenner, insbesondere für Fahrzeugheizgeräte, mit einer Blende, die einen inneren Verbrennungsbereich von einem äußeren Bereich trennt, wobei in dem äußeren Bereich ein lichtempfindlicher Sensor zur Flammerkennung angeordnet ist und wobei die flexible Blende mindestens eine Lichtöffnung aufweist, die einen Durchtritt von Licht aus dem inneren Verbrennungsbereich in den äußeren Bereich ermöglicht, wobei die Lichtöffnung dazu vorgesehen ist, auch einen Durchtritt von Verbrennungsluft aus dem äußeren Bereich in den inneren Verbrennungsbereich zu ermöglichen.

Weiterhin betrifft die Erfindung ein Fahrzeugheizgerät.

Heutzutage sind Kraftfahrzeuge vielfach mit Fahrzeugheizgeräten ausgestattet, die insbesondere als Standheizungen und/oder Zuheizer dienen. Ebenfalls ist es in den meisten Fällen möglich, Fahrzeugheizgeräte in Kraftfahrzeugen nachzurüsten. Derartige Heizgeräte finden auch in anderen Umgebungen ihren Einsatz, beispielsweise in Booten, Wohnwägen oder anderen mobilen oder stationären Bereichen. Insbesondere bei Kraftfahrzeugen wird in dem Fahrzeugheizgerät der gleiche Brennstoff verbrannt, der auch bei der Verbrennung im Betriebsmotor genutzt wird, also insbesondere Dieselkraftstoff oder Benzin. Dieser in flüssiger Form im Fahrzeug vorrätige Brennstoff muss zum Zwecke der Verbrennung in den gasförmigen Aggregatzustand überführt werden. Hierzu bedient man sich vor allem den Prinzipien der Zerstäubung und/oder der Verdampfung. In Zerstäuberbrennern ist eine Düse vorgesehen, mittels der der Kraftstoff zunächst in Tröpfchenform überführt wird, um dann aufgrund der im Fahrzeugheizgerät anwesenden Wärmeenergie in den gasförmigen Zustand überzugehen. Das für die Verbrennung erforderliche Oxidationsmittel wird in Form eines Brennluftstroms dem Verbrennungsbereich im Fahrzeugheizgerät zugeführt. Vielfach ist den Brennern der Fahrzeugheizgeräte auch eine Vorrichtung zur Flammerkennung zugeordnet. Dabei handelt es sich um einen wie auch immer gearteten Sensor, der die Anwesenheit einer Flamme im Brenner erkennt und ein entsprechendes Signal an ein Steuergerät des Fahrzeugheizgerätes weiterleitet. In Abhängigkeit hiervon werden die Steuer- und Regelparameter des Fahrzeugheizgerätes eingestellt, beispielsweise im Sinne einer Modifikation des Brennerbetriebs nach erfolgreichem Zünden des Brenners oder bei einem beabsichtigten oder unbeabsichtigten Erlöschen der Flamme, wobei dann insbesondere eine Unterbrechung der Brennstoffzuführung erfolgt. Ein gattungsgemäßer Brenner ist aus der DE 28 02 543 A1 vorbekannt.

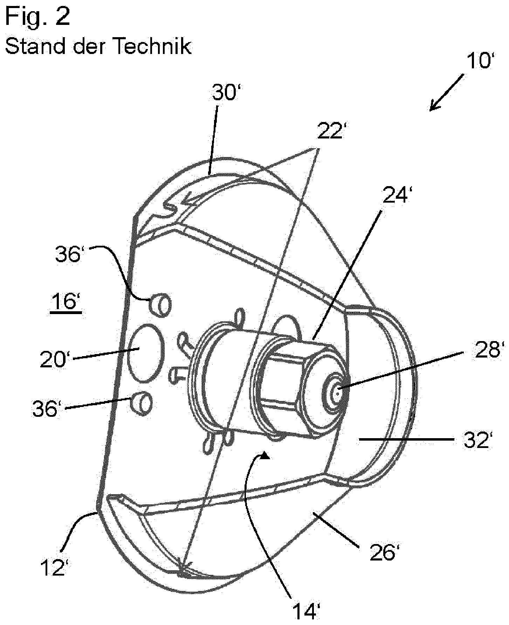

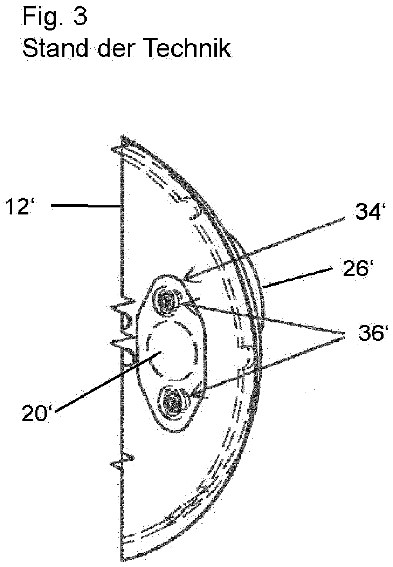

Ein anderes Beispiel für einen Düsenbrenner des Standes der Technik ist in Figur 2 in teilweise aufgeschnittener Darstellung gezeigt. Eine Einzelheit dieses Düsenbrenners stellt Figur 3 dar. Der Brenner 10' weist einen inneren Verbrennungsbereich 14' auf, der durch eine trichterförmige Wand 26' begrenzt ist. Der innere Verbrennungsbereich 14' umfasst im Wesentlichen die eigentliche Brennkammer sowie den daran offen angrenzenden Bereich innerhalb der trichterförmigen Wand 26', der wesentlich zur Gemischbildung beiträgt. Die trichterförmige Wand 26' ist in dieser Darstellung teilweise aufgeschnitten gezeigt. Hierdurch ist Einblick in den inneren Verbrennungsbereich 14' gewährt. Man erkennt eine Düse 24', welcher Brennstoff zuführbar ist. Der Brennstoff tritt in Betrieb des Brenners 10' aus einer Düsenöffnung 28' aus, und er wird auf diese Weise der Verdampfung und der schließlichen Verbrennung zugeführt. Der innere Verbrennungsbereich 14' ist weiterhin durch eine flexible Blende 12' begrenzt, die hier abgeschnitten dargestellt ist, wobei die flexible Blende 12' eine im Wesentlichen kreisscheibenförmige Gestalt hat. Auf der flexiblen Blende 12' sitzt ein Rand 30' der trichterförmigen Wand 26' auf. Durch das Zusammenwirken der trichterförmigen Wand 26' und der flexiblen Blende 12' wird so der innere Verbrennungsbereich 14' weitergehend eingegrenzt. Eine flexible Blende 12' im Sinne der vorliegenden technischen Lehre ist eine Blende, die, insbesondere beim Zusammenbau des Brenners, mechanisch leicht elastisch oder plastisch verformbar ist. Die Flexibilität der Blende erlaubt einen Toleranzausgleich zumindest im Rahmen der vorhandenen fertigungsbedingten Maßungenauigkeit auch über viele Temperaturzyklen des Brenners hinweg, insbesondere eine Vermeidung von unerwünschten Spalten im Kontaktbereich zwischen der flexiblen Blende 12' und der trichterförmigen Wand 26'. Die trichterförmige Wand 26' verjüngt sich ausgehend von der Blende 12', und sie hat auf ihrer der flexiblen Blende 12' abgewandten Seite eine Öffnung 32' um hier die Verteilung von Brennstoff und Brennluft sowie die Ausbildung einer Flamme im weitergehenden Brennraum zuzulassen. Brennstoff wird der Düse über eine hier nicht dargestellte Leitung zugeführt, die von der der Düse 24' abgewandten Seite der flexiblen Blende 12' durch die flexible Blende 12' hindurchtritt. Die für die Verbrennung erforderliche Brennluft wird dem inneren Verbrennungsbereich 14' über Öffnungen 22' zugeführt. Diese sind im Rand 30' der trichterförmigen Wand 26' ausgebildet und u-förmig gestaltet. Durch das Aufsitzen des Randes 30' der trichterförmigen Wand 26' auf der flexiblen Blende 12' werden die Öffnungen 22' schließlich definiert. Die Flexibilität der flexiblen Blende 12' stellt eine definierte Größe der Öffnung 22' auch unter Anwesenheit der üblichen Fertigungstoleranzen sicher und vermeidet unerwünschte Spalten zwischen der flexiblen Blende 12' und der trichterförmigen Wand auch über viele Temperaturzyklen des Brenners hinweg. Die flexible Blende 12' selber weist eine Lichtöffnung 20' auf, die beispielsweise einen Durchmesser von 12 mm hat. Hierdurch kann Licht aus dem inneren Verbrennungsbereich 14' in einen äußeren Bereich 16' des Brenners 10' austreten. Der äußere Bereich 16' umfasst den an den inneren Verbrennungsbereich 14' angrenzenden Raumbereich, in dem keine Verbrennung und kein Beitrag zur Gemischbildung erfolgt. Dieses Licht erreicht einen lichtempfindlichen Sensor, beispielsweise eine Fotodiode, die im äußeren Bereich 16' des Brenners 10' angeordnet ist und welche der Flammerkennung dient. Damit die Brennluft definiert durch die hierfür vorgesehenen Öffnungen 22' in der trichterförmigen Wand 26' aus dem äußeren Bereich 16' in den inneren Verbrennungsbereich 14' gelangt, ist die Lichtöffnung 20' mit einer Glimmerscheibe 34' abgedeckt. Diese ist mit zwei Nieten 36' an der der Düse 24' abgewandten Seite der flexiblen Blende 12' an dieser befestigt. Figur 3 ermöglicht einen Blick auf die flexible Blende 12' von der der Düse 24' sowie der trichterförmigen Wand 26' abgewandten Seite der flexiblen Blende 12'. Hier ist die mit den Nieten 36' an der flexiblen Blende 12' befestigte Glimmerscheibe 34' vollständig zu erkennen, so wie sie die Lichtöffnung 20' abdeckt.

Der so aufgebaute Düsenbrenner arbeitet an sich verlässlich. Durch die Öffnungen 22' in der trichterförmigen Wand 26' erfolgt eine über Anordnung und Größe der Öffnungen 22' gut einstellbare Brennluftzuführung, und die Glimmerscheibe 34' verhindert einen Eintritt von Fehlluft durch die große Lichtöffnung der flexiblen Blende 12' hindurch aus dem äußeren Bereich 16' in den inneren Verbrennungsbereich 14'. Gleichwohl kann ein im äußeren Bereich angeordneter Sensor die Anwesenheit einer Flamme zuverlässig erfassen. Um ferner eine definierte Brennluftzuführung in radialer Richtung sicherzustellen, ist die Blende 12' flexibel, denn hierdurch können Toleranzen ausgeglichen werden. Brennluft tritt also tatsächlich nur durch die Öffnungen 22' ein und nicht an anderen Bereichen des Randes 30' der trichterförmigen Wand 26'.

Beim Betrieb eines Brenners entstehen Rückstände, wie zum Beispiel Ruß oder unverbrannter Brennstoff. Diese können sich über die Lebensdauer auf der Glimmerscheibe ablagern, wodurch die Flammerkennung durch den lichtempfindlichen Sensor beeinträchtigt wird. Im Extremfall kann die Glimmerscheibe sogar optisch dicht werden, so dass überhaupt keine Flammerkennung mehr stattfinden kann. Daher ist eine regelmäßige Wartung dieses Brenners erforderlich, um die Glimmerscheibe auf ihre Lichtdurchlässigkeit zu überprüfen und um diese erforderlichenfalls zu säubern. Ferner ist festzustellen, dass durch die Einbringung der Glimmerscheibe (z. B. mit Nieten befestigt) die Flexibilität der Blende lokal beeinträchtigt wird. Hierdurch kann es mitunter zu einem mangelhaften Toleranzausgleich kommen, so dass insbesondere temperaturbedingte Materialausdehnungen nicht mehr durch die Flexibilität der Blende ausgeglichen werden können. Somit kann es dann eben doch zum Eindringen von Fehlluft am Rand der trichterförmigen Wand abseits der für den eigentlichen Lufteintritt vorgesehenen Öffnungen kommen. Ebenfalls kann insbesondere durch Temperatureffekte die Dichtwirkung der Glimmerscheibe an der flexiblen Blende teilweise verloren gehen.

Der Erfindung liegt die Aufgabe zugrunde, die oben geschilderten Nachteile des Brenners des Standes der Technik zu beseitigen. Insbesondere ist ein zum gattungsgemäßen Brenner alternativer wartungsfreier Brenner erwünscht, bei dem stets eine zuverlässige Flammerkennung stattfinden kann und bei dem ein Eindringen von "falscher Luft" in den inneren Verbrennungsbereich ausgeschlossen ist.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut auf dem gattungsgemäßen Brenner dadurch auf, dass die Blende flexibel ist.

Bei dem erfindungsgemäßen Brenner ist vorgesehen, dass die Lichtöffnung dazu vorgesehen ist, auch einen Durchtritt von Verbrennungsluft aus dem äußeren Bereich in den inneren Verbrennungsbereich zu ermöglichen. Anders gesagt, wird auf die Glimmerscheibe, die beim Brenner des Standes der Technik zwingend vorzusehen ist, gänzlich verzichtet. Damit sind sämtliche Nachteile, die durch die Befestigung der Glimmerscheibe und durch den Wartungsbedarf aufgrund der Glimmerscheibe entstehen, beseitigt. Durch die Berücksichtigung der Lichtöffnung bei der Auslegung der Brennluftführung, kann die Lichtöffnung in mindestens eine der Brennluftöffnungen integriert werden.

Es kann vorgesehen sein, dass die Lichtöffnung kreisförmig oder langlochförmig oder sichelförmig oder elliptisch ist. Man ist in der Formgebung für die Lichtöffnung also relativ frei, so dass die Lichtöffnung optimal den strömungstechnischen und optischen Bedürfnissen angepasst werden kann. Insbesondere muss bei der Formgebung der Lichtöffnung in keiner Weise mehr auf die Größe oder Form der verfügbaren Glimmerscheiben Rücksicht genommen werden.

Nützlicherweise ist vorgesehen, dass mindestens eine weitere Öffnung in der flexiblen Blende vorgesehen ist, die einen Durchtritt von Verbrennungsluft aus dem äußeren Bereich in den inneren Verbrennungsbereich ermöglicht. In der flexiblen Blende wird also insgesamt ein Lochbild zur Verfügung gestellt, welches eine optimale Brennluftzuführung ermöglicht. Die Brennluft strömt axial aus dem äußeren Bereich in den inneren Verbrennungsbereich. Die Lichtöffnung kann gleichberechtigtes Mitglied des Lochbildes sein, insbesondere, was Größe und Anordnung betrifft, oder sie kann sich diesbezüglich von den anderen Öffnungen unterscheiden.

Die Erfindung ist in besonders vorteilhafter Weise dadurch weitergebildet, dass der lichtempfindliche Sensor bezüglich der mindestens einen Lichtöffnung ausgerichtet ist. Einerseits kann es sich bei der Lichtöffnung um eine solche Öffnung handeln, die sich gar nicht von irgendwelchen anderen Öffnungen in der Blende unterscheidet. Der lichtempfindliche Sensor muss also schlicht hinter irgendeiner Öffnung angeordnet werden, die in der Blende vorgesehen ist. Allerdings kann es vorteilhaft sein, die Lichtöffnung in spezieller Weise zu gestalten, beispielsweise größer als die anderen Öffnungen in der flexiblen Blende, und den Sensor genau hinter dieser Öffnung anzuordnen. Hierdurch werden die Empfindlichkeit und die Zuverlässigkeit der Flammerkennung optimiert. Auf den Lichtsensor trifft somit direktes Licht und Streulicht.

Der erfindungsgemäße Brenner ist vorzugsweise derart gestaltet, dass die flexible Blende einen Durchtritt von Brennstoff aus dem äußeren Bereich in den inneren Verbrennungsbereich ermöglicht, wobei der Brennstoff einer in dem inneren Verbrennungsbereich angeordneten Düse zuführbar ist, und dass der innere Verbrennungsbereich durch eine trichterförmige Wand begrenzt ist, die sich von der flexiblen Blende weg verjüngt. Es kann also prinzipiell mit einem Brenner gearbeitet werden, der sich von seiner äußeren Gestalt kaum von dem Brenner des Standes der Technik unterscheidet. Insbesondere kann eine trichterförmige Wand verwendet werden, die sich von der flexiblen Blende ausgehend verjüngt, so dass keine oder kaum Veränderungen an der trichterförmigen Wand vorzunehmen sind. Ferner kann auch die Brennstoffzuführung durch die flexible Blende in gleicher Weise erfolgen, wie dies aus dem Stand der Technik bekannt ist.

Allerdings kann es von Nutzen sein, dass die trichterförmige Wand keine Öffnungen für einen Durchtritt von Verbrennungsluft aufweist. Dies stellt bezogen auf den Stand der Technik eine geringfügige Modifikation der trichterförmigen Wand dar, die aber in einfacher Weise darzustellen ist. Es werden nämlich schlicht die u-förmigen Ausnehmungen an der trichterförmigen Wand fortgelassen. Letztlich vereinfacht sich somit der gesamte Herstellungsprozess des Brenners. Auch der Betrieb des Brenners wird überschaubarer, da nun kein Gemisch aus radial und axial eintretender Brennluft mehr vorliegt. Die gesamte Brennluftzuführung kann anhand des Lochbildes in der flexiblen Blende eingestellt werden, so dass strömungstechnisch besonders einfache Verhältnisse bei nur axialem Eintritt von Brennluft vorliegen.

Die Erfindung wird nun anhand der begleitenden Zeichnungen auf der Grundlage einer besonders bevorzugten Ausführungsform beispielhaft erläutert.
- Figur 1: zeigt einen erfindungsgemäßen Brenner in teilweise aufgeschnittener Darstellung.
- Figur 2: zeigt einen Brenner des Standes der Technik in teilweise aufgeschnittener Darstellung.
- Figur 3: zeigt eine Einzelheit des Brenners gemäß dem Stand der Technik.

Bei der nachfolgenden Beschreibung der bevorzugten Ausführungsform werden Bezugszeichen verwendet, die mit den Bezugszeichen assoziiert sind, welche bei der obigen Beschreibung des Standes der Technik anhand der Figuren 2 und 3 verwendet wurden. Wurde beispielsweise im Zusammenhang mit dem Stand der Technik für den Rand der trichterförmigen Wand das Bezugszeichen 30' verwendet, so findet sich an dieser Stelle im Folgenden das Bezugszeichen 30. Hierdurch ist der erfindungsgemäße Brenner und dessen Weiterentwicklung gegenüber dem Stand der Technik in einleuchtender Weise beschreibbar.

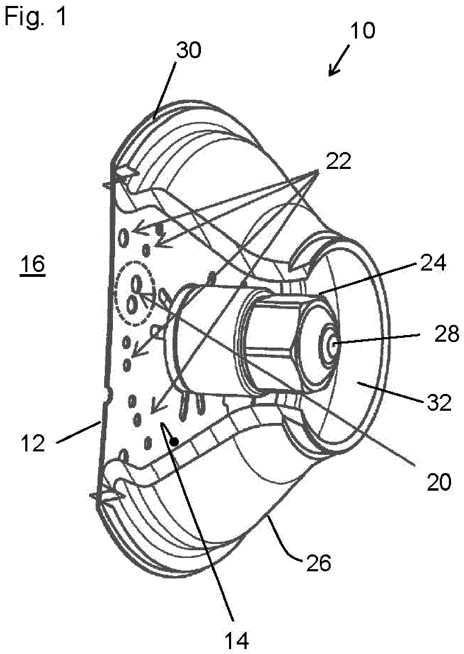

Figur 1 zeigt einen erfindungsgemäßen Brenner 10 in teilweise aufgeschnittener Darstellung. Der Brenner 10 weist eine flexible Blende 12 und eine trichterförmige Wand 26 auf. Die trichterförmige Wand ist teilweise aufgeschnitten dargestellt, um den Blick in den inneren Verbrennungsbereich 14 des Brenners 10 freizugeben. Entsprechend den Schnittflächen an der trichterförmigen Wand 26 ist die flexible Blende 12 abgeschnitten gezeigt. Im Innenbereich der trichterförmigen Wand 26 erkennt man die Düse 24 mit der Düsenöffnung 28. Der Rand 30 der trichterförmigen Wand 26 sitzt vollumfänglich auf der flexiblen Blende 12 auf. Eine flexible Blende 12 im Sinne der vorliegenden technischen Lehre ist eine Blende, die, insbesondere beim Zusammenbau des Brenners, mechanisch leicht elastisch oder plastisch verformbar ist. Die Flexibilität der Blende erlaubt einen Toleranzausgleich zumindest im Rahmen der vorhandenen fertigungsbedingten Maßungenauigkeiten auch über viele Temperaturzyklen des Brenners hinweg, insbesondere eine Vermeidung von unerwünschten Spalten im Kontaktbereich zwischen der flexiblen Blende 12 und der trichterförmigen Wand 26. Die trichterförmige Wand 26 verjüngt sich von der flexiblen Blende 12 ausgehend bis hin zu einer Öffnung 32, in die hinein der Brennstoff zerstäubt wird, wobei sich weitergehend daran der Brennraum anschließt. Insbesondere hat die trichterförmige Wand 26 an ihrem Rand 30 keine u-förmigen Öffnungen mehr, so dass kein radialer Brennlufteintritt in den inneren Verbrennungsbereich 14 stattfindet, anders als beim Stand der Technik. Allerdings ist in der Blende 12 ein Lochbild vorgesehen, das aus einer Vielzahl von Öffnungen 20, 22 besteht. Diese ermöglichen einen axialen Eintritt von Brennluft aus dem äußeren Bereich 16 des Brenners 10 in den inneren Verbrennungsbereich 14. Der innere Verbrennungsbereich 14 umfasst im Wesentlichen die eigentliche Brennkammer sowie den daran offen angrenzenden Bereich innerhalb der trichterförmigen Wand 26, der wesentlich zur Gemischbildung beiträgt. Der äußere Bereich 16 umfasst die an den inneren Verbrennungsbereich 14 angrenzenden Raumbereich, in denen keine Verbrennung und kein Beitrag zur Gemischbildung erfolgt. Zwei der Öffnungen 20, 22, nämlich die mit dem Bezugszeichen 20 gekennzeichneten Öffnungen, nehmen eine Sonderrolle ein. Ausgerichtet mit diesen Lichtöffnungen 20 ist nämlich im äußeren Bereich 16 ein Lichtsensor angeordnet, der einen unbeeinträchtigten Einblick in den inneren Verbrennungsbereich 14 hat. Insbesondere ist keine Glimmerscheibe vorgesehen, die erblinden oder verrußen könnte. Hierdurch ist der erfindungsgemäße Brenner 10 wartungsfrei. Ferner wird durch das Fehlen einer starren Glimmerscheibe die Flexibilität der flexiblen Blende 12 in keiner Weise mehr beeinträchtigt. Folglich schließt die flexible Blende auch bei großen Temperaturschwankungen stets dicht am Rand 30 der trichterförmigen Wand 26 an. Ist der Lichtsensor nicht mit speziellen Öffnungen ausgerichtet und/oder unterscheiden sich die Lichtöffnungen gar nicht von anderen Öffnungen, so reagiert der Lichtsensor im Wesentlichen auf Streulicht.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10, 10': Brenner
- 12, 12': flexible Blende
- 14, 14': innerer Verbrennungsbereich
- 16, 16': äußerer Bereich des Brenners
- 20, 20': Lichtöffnung
- 22, 22': Öffnung
- 24, 24': Düse
- 26, 26': trichterförmige Wand
- 28, 28': Düsenöffnung
- 30, 30': Rand
- 32, 32': Öffnung
- 34': Glimmerscheibe
- 36': Niet

## Patentansprüche

1. Brenner (10), insbesondere für Fahrzeugheizgeräte, mit einer Blende (12), die einen inneren Verbrennungsbereich (14) von einem äußeren Bereich (16) trennt, wobei in dem äußeren Bereich (16) ein lichtempfindlicher Sensor zur Flammerkennung angeordnet ist und wobei die Blende (12) mindestens eine Lichtöffnung (20) aufweist, die einen Durchtritt von Licht aus dem inneren Verbrennungsbereich (14) in den äußeren Bereich (16) ermöglicht, wobei die Lichtöffnung (20) dazu vorgesehen ist, auch einen Durchtritt von Verbrennungsluft aus dem äußeren Bereich (16) in den inneren Verbrennungsbereich (14) zu ermöglichen, **dadurch gekennzeichnet, dass** die Blende (12) flexibel ist.

2. Brenner (10) nach Anspruch 1, **dadurch gekennzeichnet, dass** die Lichtöffnung kreisförmig oder langlochförmig oder sichelförmig oder elliptisch ist.

3. Brenner (10) nach Anspruch 1 oder 2, **dadurch gekennzeichnet, dass** mindestens eine weitere Öffnung (22) in der flexiblen Blende (12) vorgesehen ist, die einen Durchtritt von Verbrennungsluft aus dem äußeren Bereich (16) in den inneren Verbrennungsbereich (14) ermöglicht.

4. Brenner (10) nach einem der vorhergehenden Ansprüche, **dadurch gekennzeichnet, dass** der lichtempfindliche Sensor bezüglich der mindestens einen Lichtöffnung (20) ausgerichtet ist.

5. Brenner (10) nach einem der vorhergehenden Ansprüche, **dadurch gekennzeichnet, dass** die flexible Blende (12) einen Durchtritt von Brennstoff aus dem äußeren Bereich (16) in den inneren Verbrennungsbereich (14) ermöglicht, wobei der Brennstoff einer in dem inneren Verbrennungsbereich (14) angeordneten Düse (24) zuführbar ist, und dass der innere Verbrennungsbereich (14) durch eine trichterförmige Wand (26) begrenzt ist, die sich von der flexiblen Blende (12) weg verjüngt.

6. Brenner (10) nach Anspruch 5, **dadurch gekennzeichnet, dass** die trichterförmige Wand (26) keine Öffnungen für einen Durchtritt von Verbrennungsluft aufweist.

7. Fahrzeugheizgerät mit einem Brenner (10) nach einem der vorhergehenden Ansprüche.

## Claims

1. A burner (10), in particular for vehicle heaters, with diaphragm (12) which separates an inner combustion region (14) from an outer region (16), wherein a light-sensitive sensor for flame detection is arranged in the outer region (16), and wherein the diaphragm (12) exhibits at least one light aperture (20) which enables a passage of light from the inner combustion region (14) into the outer region (16), wherein the light aperture (20) is provided to enable also a passage of combustion air from the outer region (16) into the inner combustion region (14), **characterized in that** the diaphragm (12) is flexible.

2. The burner (10) as claimed in claim 1, **characterized in that** the light aperture is circular or slot-shaped or sickle-shaped or elliptical.

3. The burner (10) as claimed in claim 1 or 2, **characterized in that** at least one further aperture (22) is provided in the flexible diaphragm (12), which enables a passage of combustion air from the outer region (16) into the inner combustion region (14).

4. The burner (10) as claimed in one of the preceding claims, **characterized in that** that the light-sensitive sensor is aligned with respect to the at least one light aperture (20).

5. The burner (10) as claimed in one of the preceding claims, **characterized in that** the flexible diaphragm (12) enables a passage of fuel from the outer region (16) into the inner combustion region (14), said fuel being capable of being supplied to a nozzle (24) arranged in the inner combustion region (14), and **in that** the inner combustion region (14) is bounded by a funnel-shaped wall (26) which tapers away from the flexible diaphragm (12).

6. The burner (10) as claimed in claim 5, **characterized in that** the funnel-shaped wall (26) exhibits no apertures for a passage of combustion air.

7. A vehicle heater with a burner (10) as claimed in one of the preceding claims

## Revendications

1. Brûleur (10), en particulier pour des appareils de chauffage de véhicule, comprenant un panneau (12) qui sépare une région de combustion intérieure (14) d'une région extérieure (16), un capteur sensible à la lumière, pour détecter une flamme, étant disposé dans la région extérieure (16) et le panneau (12) présentant au moins une ouverture pour la lumière (20) qui permet un passage de la lumière depuis la région de combustion intérieure (14) dans la région extérieure (16), l'ouverture pour la lumière (20) étant prévue de manière à permettre également un passage pour de l'air de combustion depuis la région extérieure (16) dans la région de combustion intérieure (14), **caractérisé en ce que** le panneau (12) est flexible.

2. Brûleur (10) selon la revendication 1, **caractérisé en ce que** l'ouverture pour la lumière est circulaire ou en forme de trou oblong ou en forme de croissant ou elliptique.

3. Brûleur (10) selon la revendication 1 ou 2, **caractérisé en ce qu'**au moins une ouverture supplémentaire (22) est prévue dans le panneau flexible (12), laquelle permet un passage de l'air de combustion depuis la région extérieure (16) dans la région de combustion intérieure (14).

4. Brûleur (10) selon l'une quelconque des revendications précédentes, **caractérisé en ce que** le capteur sensible à la lumière est orienté par rapport à l'au moins une ouverture pour la lumière (20).

5. Brûleur (10) selon l'une quelconque des revendications précédentes, **caractérisé en ce que** le panneau flexible (12) permet un passage de combustible depuis la région extérieure (16) dans la région de combustion intérieure (14), le combustible pouvant être acheminé à une buse (24) disposée dans la région de combustion intérieure (14), et **en ce que** la région de combustion intérieure (14) est limitée par une paroi en forme d'entonnoir (26) qui se rétrécit en s'éloignant du panneau flexible (12).

6. Brûleur (10) selon la revendication 5, **caractérisé en ce que** la paroi en forme d'entonnoir (26) ne présente pas d'ouverture pour un passage d'air de combustion.

7. Appareil de chauffage de véhicule comprenant un brûleur (10) selon l'une quelconque des revendications précédentes.
